# EUROPEAN PATENT APPLICATION

(11) **EP 4 140 312 A1**
(43) Date of publication of application: **01.03.2023**
(21) Application number: 21792880.3
(22) Date of filing: 23.04.2021
(51) Int. Cl.: A23C 9/13

(54) **FERMENTED MILK AND METHOD FOR PRODUCING SAME**

(30) Priority: 23.04.2020 JP 2020076404
(71) Applicant: Mitsubishi Chemical Corporation, Chiyoda-ku Tokyo 100-8251 (JP)
(72) Inventor: SAKURADA, Nobuyuki, Tokyo 100-8251 (JP); HARA, Hideyuki, Tokyo 100-8251 (JP)
(74) Representative: Hoffmann Eitle
(86) International application number: PCT/JP2021/016467
(87) International publication number: WO 2021/215530

(57) **Abstract**

The present invention provides fermented milk with modified flavor and/or texture, fermented milk with a suppressed acidity increase during storage, and a production method therefor. Fermented milk according to the present invention comprises a food emulsifier. The method for producing fermented milk according to the present invention comprises the steps of: preparing a raw material composition containing a food emulsifier; and adding a lactic acid bacterium starter to the raw material composition for fermentation.

## Description

### Technical Field

The present invention relates to fermented milk such as yogurt and a production method therefor. The present invention relates more specifically to fermented milk with modified flavor and texture, fermented milk with a suppressed acidity (lactic acidity) increase during storage, and a production method therefor.

### Background Art

Sucrose fatty acid esters and/or glycerol fatty acid esters are commonly used as emulsifiers in the field of foods. Regarding the functions of these food emulsifiers, it has been known that beverages with excellent emulsification stability can be provided by adding a food emulsifier to processed foods or raw materials for processed foods (or possibly by using a food emulsifier during processing of other raw materials in advance) (Patent Literature 1); the food emulsifier can improve the dispersibility of calcium agents (Patent Literatures 2 and 3), iron agents (Patent Literature 4), crushed nuts (Patent Literature 5), phytosterols (Patent Literature 6), creams (Patent Literature 7), or fats or oils (Patent Literature 8), so that they can be mixed in foods; the food emulsifier can suppress yogurt-water separation (Patent Literature 9); and the food emulsifier makes it possible to provide beverages with excellent bacteriostatic properties (Patent Literatures 10 and 11). In addition, Non Patent Literature 1 describes addition of each food emulsifier to non-fat low-calorie yogurt, but is silent on their addition to fat-containing fermented milk with complex flavors.

### Citation List

### Patent Literature

Patent Literature 1: WO 2014/148633
Patent Literature 2: WO 96/13176
Patent Literature 3: JP 2001-224306 A
Patent Literature 4: WO 2013/141139
Patent Literature 5: JP S58(1983)-081768
Patent Literature 6: JP 2005-520507 A
Patent Literature 7: JP H01(1989)-037248 A
Patent Literature 8: JP H08(1996)-089167 A
Patent Literature 9: JP 2019-136025 A
Patent Literature 10: JP S58(1983)-0175482 A
Patent Literature 11: JP H08(1996)-0228676 A

### Non Patent Literature

Non Patent Literature 1: K. Farooq and Z.U. Haque (1992): Effect of Sugar Ester on the Textural Properties of Nonfat Low Calorie Yogurt, J Dairy Sci 75: 2676-2680

### Summary of Invention

### Technical Problem

The present invention addresses the problem of providing fermented milk with modified flavor and/or texture and a production method therefor. The present invention addresses another problem of providing fermented milk with a suppressed acidity increase during storage and a production method therefor.

### Solution to Problem

The present inventors have found that when a food emulsifier is added to a raw material composition for fermented milk containing a raw material milk and the like and the mixture is then fermented with a lactic acid bacterium starter, fermented milk with modified flavor such as reduced acidity and modified texture such as softer or harder texture can be obtained unexpectedly. The present inventors have also found that when the raw material composition is fermented to produce fermented milk and a food emulsifier is then added thereto, an increase in acidity during storage can be suppressed unexpectedly.

Specifically, one aspect of the present invention encompasses some of the following items of the invention.

### [Item 1]

A method for producing fermented milk, comprising a process of adding a food emulsifier.

### [Item 2]

The production method according to item 1, comprising the steps of:
preparing a raw material composition containing the food emulsifier; and
adding a lactic acid bacterium starter to the raw material composition for fermentation.

### [Item 3]

The production method according to item 2, wherein the food emulsifier comprises at least one fatty acid ester selected from the group consisting of sucrose fatty acid esters, monoglycerides, organic acid monoglycerides, polyglycerol fatty acid esters having an average polymerization degree of 3 or less and having palmitic acid as a constituent fatty acid, and stearoyl lactylates.

### [Item 4]

The production method according to item 3, wherein the food emulsifier comprises at least one fatty acid ester selected from the group consisting of monoglycerides, organic acid monoglycerides, polyglycerol fatty acid esters having an average polymerization degree of 3 or less and having palmitic acid as a constituent fatty acid, and stearoyl lactylates.

### [Item 5]

The production method according to item 3 or 4, wherein the polyglycerol fatty acid esters have an average polymerization degree of less than 3.

### [Item 6]

The production method according to any one of items 3 to 5, wherein the fatty acid constituting the food emulsifier has an unsaturated fatty acid content of 30% or less.

### [Item 7]

The production method according to any one of items 2 to 6, wherein a content of the food emulsifier in the raw material composition is from 0.01 to 0.3 wt%.

### [Item 8]

The production method according to any one of items 2 to 7, wherein the fermented milk has a fat content of 0.15 to 15.0%.

### [Item 9]

The production method according to any one of items 2 to 8, wherein the food emulsifier has not been pre-treated with any phytosterol.

### [Item 10]

The production method according to claim 1, comprising the steps of:
adding a lactic acid bacterium starter to a raw material composition for fermentation; and
after addition of the lactic acid bacterium starter to the raw material composition for fermentation, adding a food emulsifier to the resulting fermented milk.

### [Item 11]

The production method according to item 10, wherein the food emulsifier comprises at least one fatty acid ester selected from the group consisting of sucrose fatty acid esters, glycerol fatty acid esters, and stearoyl lactylates.

### [Item 12]

The production method according to item 10 or 11, wherein the food emulsifier has not been pre-treated with calcium or iron.

### [Item 13]

The production method according to any one of items 10 to 12, wherein content of the food emulsifier in the raw material composition is 0.01 wt% or more.

### [Item 14]

The production method according to any one of items 10 to 13, wherein the fermented milk has a fat content of 0 to 5.0%.

### [Item 15]

The production method according to any one of items 10 to 14, wherein the total number of viable *Lactobacillus bulgaricus* and *Streptococcus thermophilus* bacteria in the fermented milk is 1 ×× 10⁶ cfu/ml or more.

### [Item 16]

The production method according to any one of items 2 to 15, wherein the lactic acid bacterium starter comprises the genus *Lactobacillus.*

### [Item 17]

The production method according to any one of items 1 to 16, wherein the fermented milk has a protein content of 2.7% or more.

### [Item 18]

Fermented milk comprising a food emulsifier.

### [Item 19]

The fermented milk according to item 18, wherein the food emulsifier comprises at least one compound selected from the group consisting of sucrose fatty acid esters, glycerol fatty acid esters, and stearoyl lactylates.

### [Item 20]

The fermented milk according to item 18 or 19, wherein a content of the food emulsifier is 0.01 wt% or more.

### [Item 21]

The fermented milk according to any one of items 18 to 20, wherein the fermented milk has a fat content of 0 to 5.0%.

### [Item 22]

The fermented milk according to any one of items 18 to 21, comprising the genus *Lactobacillus* as lactic acid bacteria.

### [Item 23]

The fermented milk according to any one of items 18 to 22, wherein the total number of viable *Lactobacillus bulgaricus* and *Streptococcus thermophilus* bacteria in the fermented milk when storage is started is 1 × 10⁶ cfu/ml or more.

### [Item 24]

The fermented milk according to items 18 to 23, wherein an increase (y%) in acidity after storage at x°C (4 ≤ x ≤ 35) for 14 days satisfies a relational expression: y ≤ 0.0115x + 0.025.

### [Item 24-1]

The fermented milk according to items 18 to 23, where an increase in lactic acidity after storage at 4 to 10°C for 14 days is less than 0.1%.

### [Item 24-2]

The fermented milk according to items 18 to 23, where an increase in lactic acidity after storage at 11 to 20°C for 14 days is less than 0.2%.

### [Item 24-3]

The fermented milk according to items 18 to 23, where an increase in lactic acidity after storage at 21 to 30°C for 14 days is less than 0.3%.

### [Item 25]

The fermented milk according to any one of items 18 to 24, wherein the fermented milk has a protein content of 2.7% or more.

### [Item 26]

The fermented milk according to any one of items 18 to 25, being substantially free of phytosterols.

### [Item 27]

The fermented milk according to any one of items 18 to 26, wherein the fermented milk has a calcium content of 1.5 wt% or less based on a nonfat milk solid content.

### [Item 28]

The fermented milk according to any one of items 18 to 27, wherein the fermented milk has an iron content of 0.001 wt% or less.

### [Item 29]

A method of modifying a flavor and/or texture of fermented milk, comprising blending a food emulsifier into a raw material composition during production of fermented milk.

### [Item 30]

A method of suppressing an increase in acidity of fermented milk during storage, comprising adding a food emulsifier to fermented milk during production of fermented milk.

### Advantageous Effects of Invention

According to the present invention, a food emulsifier is blended into a raw material composition for fermented milk, and the mixture is then fermented with a lactic acid bacterium starter. This can produce fermented milk with modified flavor such as reduced acidity and modified texture such as softer or harder texture. Alternatively, according to the present invention, a food emulsifier is added after fermented milk is obtained, so that fermented milk with a suppressed acidity increase during storage can be obtained.

### Description of Embodiments

### ---Fermented Milk---

Fermented milk of the invention comprises at least a food emulsifier and common ingredients for fermented milk (e.g., lactic acid bacteria (starter), raw material milk-derived proteins, fats), and may further optionally comprise other ingredients that are included in common or known fermented milk within the range (type and amount) in which the effects of the invention are exerted.

### - Fermented milk

In the present invention, "fermented milk" refers to a food product that meets at least one of the definitions in the "Ministerial Ordinance Concerning Standards for Ingredients of Milk and Dairy Products" (Ministerial Ordinance on Milk and Related Products, namely Ministerial Ordinance of the Ministry of Health and Welfare No. 52, December 27, 1951), an Ordinance based on the Food Sanitation Law of Japan, or in the international food standard CODEX STANDARD FOR FERMENTED MILKS (CODEX STAN 243-2003), and that can be obtained by the production method specified in any of them. For example, in the above-mentioned Ministerial Ordinance on Milk and Related Products, fermented milk is defined such that "milk or milk equivalent containing a nonfat milk solid content equal to or greater than the milk is fermented with lactic acid bacteria or yeast and made into a paste-like or liquid-like product or frozen product thereof". Examples of such fermented milk include solid fermented milk such as yogurt (set type yogurt), paste fermented milk (soft type yogurt), and liquid fermented milk (drink type yogurt). The fermented milk of the invention may be any of them.

### - Food emulsifier

The food emulsifier in the present invention is not particularly limited if the emulsifier can be used for foods, and may be selected appropriately in consideration of the effects of the invention to be achieved.

Examples of the food emulsifier include a fatty acid ester compound such as sucrose fatty acid ester, glycerol fatty acid ester (e.g., monoglyceride, organic acid monoglyceride, polyglycerol fatty acid ester), polysorbate (polyoxyethylene sorbitan fatty acid ester), sorbitan fatty acid ester, propylene glycol fatty acid ester, stearoyl lactylate (e.g., sodium stearoyl lactylate, calcium stearoyl lactylate), enzymatically degraded lecithin and lecithin; and saponin. These food emulsifiers may be used singly or in combinations of two or more thereof.

In one embodiment of the present invention, the food emulsifier preferably includes at least one fatty acid ester selected from the group consisting of sucrose fatty acid esters, glycerol fatty acid esters, and stearoyl lactylates, in view of modifying the flavor, for instance, reducing the acid taste. It is more preferable to include at least one fatty acid ester selected from the group consisting of sucrose fatty acid esters, monoglycerides, organic acid monoglycerides, polyglycerol fatty acid esters having an average polymerization degree of 3 or less and having palmitic acid as a constituent fatty acid, and stearoyl lactylates. It is still more preferable to include at least one fatty acid ester selected from the group consisting of sucrose fatty acid esters, organic acid monoglycerides, and polyglycerol fatty acid esters having an average polymerization degree of 3 or less and having palmitic acid as a constituent fatty acid. It is particularly preferable to include at least one fatty acid ester selected from the group consisting of sucrose fatty acid esters and polyglycerol fatty acid esters having an average polymerization degree of 3 or less and having palmitic acid as a constituent fatty acid. It is most preferable to include a sucrose fatty acid ester.

In one embodiment of the present invention, the food emulsifier preferably includes at least one fatty acid ester selected from the group consisting of monoglycerides, organic acid monoglycerides, polyglycerol fatty acid esters having an average polymerization degree of 3 or less and having palmitic acid as a constituent fatty acid, and stearoyl lactylates from the viewpoint of emulsifying performance. It is more preferable to include at least one fatty acid ester selected from the group consisting of organic acid monoglycerides and polyglycerol fatty acid esters having an average polymerization degree of 3 or less and having palmitic acid as a constituent fatty acid from the viewpoint of emulsifying performance. It is still more preferable to include a polyglycerol fatty acid ester having an average polymerization degree of 3 or less and having palmitic acid as a constituent fatty acid from the viewpoint of emulsifying performance.

In one embodiment of the present invention, the food emulsifier preferably includes at least one fatty acid ester selected from the group consisting of sucrose fatty acid esters and glycerol fatty acid esters from the viewpoint of softening the texture. It is more preferable to include at least one fatty acid ester selected from the group consisting of sucrose fatty acid esters, monoglycerides, and polyglycerol fatty acid esters from the viewpoint of emulsifying performance. It is still more preferable to include at least one fatty acid ester selected from the group consisting of sucrose fatty acid esters and polyglycerol fatty acid esters from the viewpoint of emulsifying performance.

In one embodiment of the present invention, the food emulsifier preferably includes at least one fatty acid ester selected from the group consisting of organic acid monoglycerides and stearoyl lactylates from the viewpoint of hardening the texture. It is more preferable to include stearoyl lactylate from the viewpoint of hardening the texture.

In one embodiment of the present invention, the food emulsifier preferably includes at least one fatty acid ester selected from the group consisting of sucrose fatty acid esters, glycerol fatty acid esters, and stearoyl lactylates in view of suppressing an acidity increase during storage. It is more preferable to include at least one fatty acid ester selected from the group consisting of sucrose fatty acid esters, organic acid monoglycerides and polyglycerol fatty acid esters in view of suppressing an acidity increase during storage. It is still more preferable to include a sucrose fatty acid ester. In this embodiment, the food emulsifier preferably consist of the above specific fatty acid ester in view of suppressing an acidity increase during storage. However, the food emulsifier may be a mixture of the above specific fatty acid ester and at least one of another fatty acid ester or food emulsifier such as saponin.

In each of the above embodiments, the food emulsifier preferably consists of the above specific fatty acid ester. However, the food emulsifier may be a mixture of the above specific fatty acid ester and at least one of another fatty acid ester or food emulsifier such as saponin.

Specific examples of the sucrose fatty acid ester include sucrose laurate (with 12 carbon atoms of fatty acid; the same below), sucrose myristate (with 14 carbon atoms), sucrose palmitate (with 16 carbon atoms), sucrose stearate (with 18 carbon atoms), sucrose oleate (with 18 carbon atoms and 1 double bond), sucrose behenate (with 22 carbon atoms), sucrose erucate (with 22 carbon atoms and 1 double bond), and sucrose mixed fatty acid ester (e.g., mixed fatty acid ester of oleic acid, palmitic acid and stearic acid). These sucrose fatty acid esters may be used singly or in combinations of two or more thereof.

In one embodiment of the present invention, when a sucrose fatty acid ester is used as a food emulsifier, from the viewpoint of reducing the acid taste, the food emulsifier is preferably a sucrose fatty acid ester with a constituent fatty acid(s) having 12 to 22 carbon atoms, more preferably a sucrose fatty acid ester with a constituent fatty acid(s) having 14 to 18 carbon atoms, still more preferably a sucrose fatty acid ester with a constituent fatty acid(s) having 14 to 16 carbon atoms, and most preferably a sucrose fatty acid ester with a constituent fatty acid(s) having 16 carbon atoms. Also, from this viewpoint, the monoester content of the sucrose fatty acid ester is preferably 50 mass% or higher, more preferably 60 mass% or higher, and still more preferably 70 mass% or higher.

In one embodiment of the present invention, when a sucrose fatty acid ester is used as a food emulsifier, from the viewpoint of modifying the texture, for instance, softening the texture, the food emulsifier is preferably a sucrose fatty acid ester with a constituent fatty acid(s) having 12 to 22 carbon atoms, more preferably a sucrose fatty acid ester with a constituent fatty acid(s) having 14 to 18 carbon atoms, still more preferably a sucrose fatty acid ester with a constituent fatty acid(s) having 14 to 16 carbon atoms, and most preferably a sucrose fatty acid ester with a constituent fatty acid(s) having 16 carbon atoms. Also, from this viewpoint, the monoester content of the sucrose fatty acid ester is preferably 50 mass% or higher, more preferably 60 mass% or higher, and still more preferably 70 mass% or higher.

In one embodiment of the present invention, when a sucrose fatty acid ester is used as a food emulsifier, from the viewpoint of suppressing an acidity increase during storage, the food emulsifier is preferably a sucrose fatty acid ester with a constituent fatty acid(s) having 12 to 22 carbon atoms, more preferably a sucrose fatty acid ester with a constituent fatty acid(s) having 12 to 18 carbon atoms, still more preferably a sucrose fatty acid ester with a constituent fatty acid(s) having 12 to 16 carbon atoms, and most preferably a sucrose fatty acid ester with a constituent fatty acid(s) having 16 carbon atoms. Also, from this viewpoint, the monoester content of the sucrose fatty acid ester is preferably 50 mass% or higher, more preferably 60 mass% or higher, and still more preferably 70 mass% or higher.

Although the sucrose fatty acid ester may also be synthesized by known procedures (e.g., transesterification between sucrose and a higher alcohol ester(s) of fatty acid), various brand (grade) products with different HLB are available, for example, as "Ryoto (registered trademark) Sugar Ester", manufactured by Mitsubishi Chemical Foods Corporation.

Specific examples of each monoglyceride include glycerol caprylate (with 8 carbon atoms of fatty acid; the same below), glycerol laurate (with 12 carbon atoms), glycerol myristate (with 14 carbon atoms), glycerol palmitate (with 16 carbon atoms), glycerol stearate (with 18 carbon atoms), glycerol oleate (with 18 carbon atoms and 1 double bond), and glycerol behenate (with 22 carbon atoms). The glycerol fatty acid ester is produced from natural fats or oils and glycerin as raw materials, for example, as a reacted monoglyceride (with a monoglyceride content of, for instance, 40% or higher) or a distilled monoglyceride (with a monoglyceride content of, for instance, 90% or higher) which is a mixture of the above monoglycerides. Preferred is a distilled monoglyceride.

Specific examples of each organic acid monoglyceride (monoglyceride derivative) include acetic acid monoglyceride, citric acid monoglyceride, succinic acid monoglyceride, diacetyl tartrate monoglyceride, and lactic acid monoglyceride. These organic acid monoglycerides may be used singly or in combinations of two or more thereof.

In one embodiment of the present invention, when an organic acid monoglyceride is used as a food emulsifier, from the viewpoint of modifying the flavor, for instance, reducing the acid taste, the food emulsifier is preferably at least one compound selected from the group consisting of citric acid monoglyceride, succinic acid monoglyceride, and diacetyl tartrate monoglyceride, and more preferably at least one compound selected from the group consisting of citric acid monoglyceride and succinic acid monoglyceride.

In one embodiment of the present invention, when an organic acid monoglyceride is used as a food emulsifier, from the viewpoint of modifying the texture, for instance, hardening the texture, the food emulsifier is preferably at least one compound selected from the group consisting of citric acid monoglyceride, succinic acid monoglyceride, and diacetyl tartrate monoglyceride, and more preferably at least one compound selected from the group consisting of succinic acid monoglyceride and diacetyl tartrate monoglyceride.

In one embodiment of the present invention, when an organic acid monoglyceride is used as a food emulsifier, from the viewpoint of suppressing an acidity increase during storage, the food emulsifier is preferably at least one compound selected from the group consisting of citric acid monoglyceride, succinic acid monoglyceride, and diacetyl tartrate monoglyceride, and more preferably at least one compound selected from the group consisting of citric acid monoglyceride and succinic acid monoglyceride.

Specific examples of each polyglycerol fatty acid ester include polyglycerol caprylate (with 8 carbon atoms of fatty acid; the same below), polyglycerol laurate (with 12 carbon atoms), polyglycerol myristate (with 14 carbon atoms), polyglycerol palmitate (with 16 carbon atoms), polyglycerol stearate (with 18 carbon atoms), polyglycerol oleate (with 18 carbon atoms and 1 double bond), and polyglycerol behenate (with 22 carbon atoms).

Note that the average polymerization degree of polyglycerol fatty acid ester and the constituent fatty acid linked to the polyglycerol fatty acid ester can be measured and identified according to conventional procedures. Examples include a procedure for separating and quantifying a TMSylated and/or acetylated polyglycerol derivative by gas chromatography (GC method). The GC analysis may be performed using a fused silica capillary tube chemically bonded to a low-polarity liquid phase such as methyl silicon, for example, with a temperature increase of 10°C/min from 100°C to 250°C. In addition, the peak(s) of polymerization degree on a gas chromatogram may be identified, for example, by introducing gas chromatography to a double-focusing mass spectrometer, ionizing and measuring a material by chemical ionization or other methods, then determining the molecular weight of the peak on the gas chromatogram from the molecular weight of its parent ion, and further determining the polymerization degree of glycerol from the chemical formula.

In one embodiment of the present invention, when a polyglycerol fatty acid ester is used as a food emulsifier, from the viewpoint of modifying the flavor, for instance, reducing the acid taste, the food emulsifier is preferably a polyglycerol fatty acid ester with a constituent fatty acid(s) having 12 to 22 carbon atoms, more preferably a polyglycerol fatty acid ester with a constituent fatty acid(s) having 14 to 18 carbon atoms, still more preferably a polyglycerol fatty acid ester with a constituent fatty acid(s) having 14 to 16 carbon atoms, and most preferably a polyglycerol fatty acid ester with a constituent fatty acid(s) having 16 carbon atoms. Also, the monoester content of the polyglycerol fatty acid ester is preferably 20 mass% or higher, more preferably 30 mass% or higher, and still more preferably 50 mass% or higher. The average polymerization degree of polyglycerol is preferably from 2 to 10, more preferably from 2 to 6, still more preferably from 2 to 4, particularly preferably from 2 to 3, and most preferably 2 or more and less than 3. These polyglycerol fatty acid esters may be used singly or in combinations of two or more thereof.

In one embodiment of the present invention, when a polyglycerol fatty acid ester is used as a food emulsifier, from the viewpoint of modifying the texture, for instance, softening the texture, the food emulsifier is preferably a polyglycerol fatty acid ester with a constituent fatty acid(s) having 12 to 22 carbon atoms, more preferably a polyglycerol fatty acid ester with a constituent fatty acid(s) having 14 to 18 carbon atoms, still more preferably a polyglycerol fatty acid ester with a constituent fatty acid(s) having 16 to 18 carbon atoms, and most preferably a polyglycerol fatty acid ester with a constituent fatty acid(s) having 18 carbon atoms. Also, the monoester content of the polyglycerol fatty acid ester is preferably 20 mass% or higher, more preferably 30 mass% or higher, and still more preferably 50 mass% or higher. The average polymerization degree of polyglycerol in the polyglycerol fatty acid ester is preferably 2 or higher, more preferably from 3 to 10, and most preferably from 4 to 6. These polyglycerol fatty acid esters may be used singly or in combinations of two or more thereof.

In one embodiment of the present invention, when a polyglycerol fatty acid ester is used as a food emulsifier, from the viewpoint of suppressing an acidity increase during storage, the food emulsifier is preferably a polyglycerol fatty acid ester with a constituent fatty acid(s) having 12 to 22 carbon atoms, more preferably a polyglycerol fatty acid ester with a constituent fatty acid(s) having 14 to 18 carbon atoms, and still more preferably a polyglycerol fatty acid ester with a constituent fatty acid(s) having 14 to 16 carbon atoms. Also, the monoester content of the polyglycerol fatty acid ester is preferably 20 mass% or higher, more preferably 30 mass% or higher, and still more preferably 50 mass% or higher. In addition, the average polymerization degree of polyglycerol is preferably from 2 to 10, more preferably from 2 to 6, still more preferably from 2 to 3, and most preferably 2 or more and less than 3. These polyglycerol fatty acid esters may be used singly or in combinations of two or more thereof.

Although the polyglycerol fatty acid ester may also be synthesized by known procedures (e.g., transesterification between polyglycerol and a higher alcohol ester(s) of fatty acid, various brand (grade) products with different HLB are available, for example, as "Ryoto (registered trademark) Polyglyester", manufactured by Mitsubishi Chemical Foods Corporation.

In one embodiment of the present invention, from the viewpoint of imparting a natural milk flavor to fermented milk, the fatty acid constituting the food emulsifier has an unsaturated fatty acid content of preferably 50% or less, more preferably 40% or less, still more preferably 30% or less, particularly preferably 20% or less, and most preferably 10% or less.

In one embodiment of the present invention, the food emulsifier is preferably a fatty acid ester compound having suitable hydrophilicity, for instance, having an HLB (Hydrophilic-Lipophilic Balance) of a standard value or higher. The HLB standard value may be set appropriately according to the type of food emulsifier used, and should be set such that the food emulsifier can be sufficiently dispersed and dissolved when blended into the raw material composition for fermented milk. In the case of using a sucrose fatty acid ester, for example, the HLB standard value is preferably 5 or higher, more preferably 9 or higher, and still more preferably 15 or higher. In the case of using a polyglycerol fatty acid ester, the value is preferably 7 or higher, more preferably 11 or higher, and still more preferably 14 or higher. In the case of using an organic acid monoglyceride, the value is preferably 5 or higher.

The HLB of fatty acid ester compound varies depending on the type (e.g., carbon number) and the number of ester-bonded fatty acids. For example, the HLB of sucrose fatty acid ester varies depending on the type and the number of fatty acids ester-bonded to the eight hydroxyl groups of sucrose (the average value per molecule of sucrose fatty acid ester, which is generally synthesized as a mixture with different numbers of ester bonds, or the monoester content and the di-, tri-, and poly-ester content as the indicator). The HLB of polyglycerol fatty acid ester also varies depending on the type and the number of fatty acids ester-bonded to the hydroxyl group(s) of polyglycerol (the average value per molecule of polyglycerol fatty acid ester, which is generally synthesized as a mixture with different numbers of ester bonds, namely an esterification degree), and the average polymerization degree of glycerol constituting the polyglycerol group. The sucrose fatty acid ester, polyglycerol fatty acid ester, or other food emulsifier with desired HLB can be synthesized under appropriate production conditions in consideration of the above matters.

Note that the HLB values of "Ryoto (registered trademark) Sugar Ester" and "Ryoto (registered trademark) Polyglyester" are each indicated in the catalogs (see Mitsubishi Chemical Foods Corporation's website, http://www.mfc.co.jp/product/nyuuka/ryoto_syuga/list.html, https://www.mfc.co.jp/product/nyuuka/ryoto_poriguri/list.html ) as approximate (as a numerical value with "about"). Each value can be regarded as the HLB of the corresponding food emulsifier (fatty acid ester compound) in the invention. When another product is used as the food emulsifier, the HLB can also refer to the catalog value. If the catalog value is unknown or if the food emulsifier is self-synthesized and used, the HLB can be determined according to a known procedure. The HLB may be calculated by, for instance, the Atlas method, the Griffin method, the Davis method, or the Kawakami method. Another method is to determine the HLB from retention time in high-performance liquid chromatography. For example, in the case (i) where the composition of fatty acid ester compound as a mixture synthesized is known, the HLB of each fatty acid ester compound may be calculated by the Griffin method and the weighted average of the HLBs may be regarded as the HLB of the fatty acid ester compound. In the case (ii) where the composition of fatty acid ester compound is unknown, the HLB of the fatty acid ester compound may be determined by comparing the retention time in high performance liquid chromatography (HPLC) with a sample of fatty acid ester compound with known HLB.

The content of food emulsifier in fermented milk (the proportion of the weight of food emulsifier to the total weight of fermented milk) is not particularly limited, and may be set, depending on the type of food emulsifier used, within the range where the effects of the invention are exerted. Such a content can be set appropriately by those skilled in the art. For example, the fermented milk of the invention may have a food emulsifier content of 0.01 wt% or more.

In one embodiment of the present invention, from the viewpoint of modifying the flavor, for instance, reducing the acid taste, the content of food emulsifier is preferably from 0.01 to 0.3 wt%. By setting the content of food emulsifier to 0.01 wt% or higher, it becomes easier to obtain fermented milk in which the effect of suppressing the acid taste is exerted. From this point of view, the content of food emulsifier is more preferably 0.03 wt% or higher and most preferably 0.06 wt% or higher. On the other hand, by setting the content of food emulsifier to 0.3 wt% or less, the acid taste is suppressed as well as a natural milk flavor is imparted to fermented milk. The content of food emulsifier is more preferably 0.2 wt% or less, still more preferably 0.15 wt% or less, and most preferably 0.11 wt% or less.

In one embodiment of the present invention, from the viewpoint of softening the texture, the content of food emulsifier is preferably from 0.01 to 0.3 wt%. By setting the content of food emulsifier to 0.01 wt% or higher, it becomes easier to obtain fermented milk in which the effect of softening the texture is exerted. From this point of view, the content of food emulsifier is more preferably 0.03 wt% or higher and most preferably 0.06 wt% or higher. On the other hand, by setting the content of food emulsifier to 0.3 wt% or less, the texture is softened as well as a natural milk flavor is imparted to fermented milk. The content of food emulsifier is more preferably 0.2 wt% or less, still more preferably 0.15 wt% or less, and most preferably 0.11 wt% or less.

In one embodiment of the present invention, from the viewpoint of hardening the texture, the content of food emulsifier is preferably from 0.01 to 0.3 wt%. By setting the content of food emulsifier to 0.01 wt% or higher, it becomes easier to obtain fermented milk in which the effect of hardening the texture is exerted. From this point of view, the content of food emulsifier is more preferably 0.03 wt% or higher and most preferably 0.06 wt% or higher. On the other hand, by setting the content of food emulsifier to 0.3 wt% or less, the texture is hardened as well as a natural milk flavor is imparted to fermented milk. The content of food emulsifier is more preferably 0.2 wt% or less, still more preferably 0.15 wt% or less, and most preferably 0.11 wt% or less.

In one embodiment of the present invention, from the viewpoint of suppressing an acidity increase during storage, the content of food emulsifier is preferably from 0.01 to 0.45 wt%. By setting the content of food emulsifier to 0.01 wt% or higher and 0.45 wt% or less, it becomes easier to obtain fermented milk in which the effect of suppressing an acidity increase during storage is exerted. From the viewpoint of this effect, the content of food emulsifier is more preferably 0.06 wt% or higher, still more preferably 0.11 wt% or higher, and most preferably 0.15 wt% or higher and more preferably 0.35 wt% or less and still more preferably 0.3 wt% or less. If necessary, the upper and lower limits of the content of food emulsifier may be adjusted in consideration of the storage temperature and/or the degree of suppression of acidity increase (how much the acidity increases after given days).

In one embodiment of the present invention, from the viewpoint of inducing a less change in the acid taste of fermented milk during storage and maintaining the flavor, the increase in acidity after storage at 10°C for 14 days is preferably 0.14% or less, more preferably 0.12% or less, still more preferably 0.1% or less, and most preferably 0.0825% or less. From the viewpoint of inducing a less change in the acid taste of fermented milk during storage and maintaining the flavor, the increase in acidity after storage at 15°C for 14 days is preferably 0.1975% or less, more preferably 0.1745% or less, still more preferably 0.15% or less, and most preferably 0.14% or less. From the viewpoint of inducing a less change in the acid taste of fermented milk during storage and maintaining the flavor, the increase in acidity after storage at 25°C for 14 days is preferably 0.3125% or less, more preferably 0.3% or less, still more preferably 0.2895% or less, and most preferably 0.255% or less. Based on the above, from the viewpoint of inducing a less change in the acid taste of fermented milk during storage and maintaining the flavor in the present invention, the increase (y%) in acidity after storage for 14 days at x°C (4 ≤ x ≤35) preferably satisfies the relational expression y ≤ 0.0115x + 0.025, more preferably satisfies the relational expression y ≤ 0.0115x + 0.002, and most preferably satisfies the relational expression y ≤ 0.0115x - 0.0325.

The content of food emulsifier in fermented milk may be determined by conventional techniques such as HPLC.

The acidity of fermented milk may be measured according to conventional procedures, for example, by using the method for measuring the acidity of milk or milk product described in the "Ministerial Ordinance Concerning Standards for Ingredients of Milk and Dairy Products" (Ministerial Ordinance on Milk and Related Products, namely Ministerial Ordinance of the Ministry of Health and Welfare No. 52, issued on December 27, 1951).

### - Lactic acid bacterium

The type of lactic acid bacterium is not particularly limited, and may be suitably selected from among the lactic acid bacteria used as a starter during production of common or known fermented milk, depending on, for instance, the properties, flavor, and/or use of the desired fermented milk, so that the effects of the present invention can be exerted. Examples of such a lactic acid bacterium include a lactic acid bacterium of the genus *Lactobacillus,* the genus *Streptococcus,* or the genus *Bifidobacterium.* These lactic acid bacteria may be used singly or in combinations of two or more thereof.

Specific examples of the lactic acid bacterium of the genus *Lactobacillus* include *Lactobacillus bulgaricus (Lactobacillus delbrueckii subsp. bulgaricus), Lactobacillus acidophilus (L. acidophilus), Lactobacillus amylovorus (L. amylovorus), Lactobacillus brevis (L. brevis), Lactobacillus buchneri (L. buchneri), Lactobacillus casei (L. casei), Lactobacillus casei subsp. rhamnosus (L. casei subsp. rhamnosus), Lactobacillus crispatus (L. crispatus),* Lactobacillus delbrueckii subsp. lactis *(L. delbrueckii subsp. lactis), Lactobacillus fermentum (L. fermentum), Lactobacillus gallinarum (L. gallinarum), Lactobacillus gasseri (L. gasseri), Lactobacillus helveticus (L. helveticus), Lactobacillus helveticus subsp. jugurti (L. helveticus subsp. jugurti), Lactobacillus johnsonii (L. johnsonii), Lactobacillus kefir (L. kefir), Lactobacillus oris (L. oris), Bacillulactos paracasei subsp. paracasei* (L. *paracasei subsp. paracasei), Lactobacillus paraplantarum (L. paraplantarum), Lactobacillus pentosus (L. pentosus), Lactobacillus plantarum (L. plantarum), Lactobacillus reuteri (L. reuteri), Lactobacillus salivalius (L. salivalius),* and *Lactobacillus zeae (L. zeae).*

Specific examples of the lactic acid bacterium of the genus *Streptococcus* include *Streptococcus thermophilus (Streptococcus salivarius subsp. thermophilus)*.

Specific examples of the lactic acid bacterium of the genus *Bifidobacterium* include *Bifidobacterium adolescentis (B. adolescentis), Bifidobacterium animalis (B. animalis), Bifidobacterium bifidum (B. bifidum), Bifidobacterium breve (B. breve), Bifidobacterium catenulatum (B. catenulatum), Bifidobacterium globosum (B. globosum), Bifidobacterium infantis (B. infantis), Bifidobacterium lactis (B. lactis), Bifidobacterium longum (B. longum), Bifidobacterium pseudocatenulatum (B. pseudocatenulatum),* and *Bifidobacterium suis (B. suis).*

In one embodiment of the present invention, the lactic acid bacteria (starter) includes bacterial of the genus *Lactobacillus.* In order to achieve the effects of the invention, the combination of lactic acid bacteria is not particularly limited. It is preferable to include both *Lactobacillus bulgaricus* and *Streptococcus thermophilus* (and other lactic acid bacteria if necessary). It is more preferable to include only *Lactobacillus bulgaricus* and *Streptococcus thermophilus.* The combination of these lactic acid bacteria follows the specification of "2.1 Fermented Milk" in the CODEX STANDARD FOR FERMENTED MILKS (CODEX STAN 243-2003). The starter containing the above lactic acid bacteria may be available as a product from, for example, Chr. Hansen, Inc. or SACCO System, Inc.

In one embodiment of the present invention, the fermented milk has a total number of viable *Lactobacillus bulgaricus* and *Streptococcus thermophilus* bacterial at the start of storage (e.g., at the end of all processes for the production of fermented milk or on the end date, Day 0) of preferably 1 × 10⁶ cfu/ml or larger, more preferably 1 × 10⁷ cfu/ml or larger, and still more preferably of 1 × 10⁸ cfu/ml or larger. In one embodiment of the present invention, the increase in acidity can be suppressed even for fermented milk that contains a relatively high number of viable bacteria in the above range at the start of storage and that maintains the number of viable bacteria in such a range over a certain period (e.g. 14 days, Day 1 to 14).

### - Proteins and fats

Proteins and fats included in fermented milk are derived from, for instance, milk or cream used as raw material milk.

The content of proteins or fats in fermented milk (the ratio of the weight of proteins or fats to the total weight of fermented milk) is not particularly limited, depends on, for instance, the properties, flavor, and/or use of fermented milk of interest, and can be set within the range where the effects of the invention are exerted. Such a content can be set appropriately by those skilled in the art.

In one embodiment of the present invention, the protein content in fermented milk is preferably 2.7% or more. The lower limit of this numerical range follows the specifications of "3.3 Composition/Milk protein)" in the CODEX STANDARD FOR FERMENTED MILKS (CODEX STAN 243-2003).

In one embodiment of the present invention, the fat content in fermented milk is preferably from 0.15 to 15.0%, more preferably from 0.5 to 15.0%, and most preferably from 1.0 to 15.0% from the viewpoint of giving a good flavor. The upper limit of this numerical range follows the specifications of "3.3 Composition/Yoghurt, Alternate Culture Yoghurt and Acidophilus milk" in the CODEX STANDARD FOR FERMENTED MILKS (CODEX STAN 243-2003). Meanwhile, the effect of giving a good flavor according to the invention is also achieved in yogurt containing a certain level of fat such as 0.15% or more, 0.5% or more, or 1.0% or more, which is not low-fat or non-fat yogurt.

In one embodiment of the present invention, the fat content in fermented milk is preferably from 0 to 5.0% and more preferably from 0 to 3.9% from the viewpoint of suppressing an acidity increase during storage. The effect of suppressing an acidity increase during storage according to the invention is also exerted preferably in such low-fat or non-fat yogurt.

The content of each of proteins or fats in fermented milk may be determined according to conventional procedures, for example, by the method described in the "Ministerial Ordinance Concerning Standards for Ingredients of Milk and Dairy Products" (Ministerial Ordinance on Milk and Related Products, namely Ordinance of the Ministry of Health and Welfare No. 52, December 27, 1951) or CODEX STANDARD FOR FERMENTED MILKS (CODEX STAN 243-2003).

Note that the amount of proteins or fats does not substantially change depending on the fermented milk production method (e.g., a fermentation process) described below (even if the amount changes, the amount is negligibly small). Thus, the content of proteins or fats in a raw material composition in a method for producing fermented milk according to the present invention can be considered to correspond to the corresponding content in fermented milk of the present invention as obtained by the production method.

### - Additional ingredients

Examples of additional ingredient(s) that can be optionally included in fermented milk of the present invention include sugars such as sucrose, and food additives such as sweeteners, colorants, thickeners/stabilizers/gelling agents (e.g., gelatin, agar, pectin, carboxymethyl cellulose (CMC)), and flavoring agents.

In one embodiment of the present invention, from the viewpoint of deteriorating or changing the flavor or texture, the fermented milk is substantially free of: phytosterols (e.g., those described in Patent Literature 6, which have been, for instance, pre-mixed with the food emulsifier in the present invention); insoluble minerals, for example, calcium compounds such as calcium carbonate or calcium phosphate or iron compounds such as ferric pyrophosphate (e.g., calcium agents or iron agents, as described in Patent Literature 2, 3, or 4, which have been, for instance, pre-mixed with the food emulsifier in the present invention); nuts such as crushed skin-roasted or oil-roasted nuts (e.g., those described in Patent Literature 5, which have been, for instance, pre-mixed with the food emulsifier in the present invention); or other ingredients that are difficult to be dispersed in the raw material composition for fermented milk (typically, those that have been, for instance, pre-mixed with the food emulsifier in the present invention).

The wording "substantially free of phytosterols" means that the phytosterol content in the raw material composition and/or in the fermented milk after fermentation is 0.09 wt% or less, preferably 0.03 wt% or less, more preferably 0.001 wt% or less, and most preferably zero.

The wording "substantially free of insoluble minerals, for example, calcium compounds such as calcium carbonate or calcium phosphate or iron compounds such as ferric pyrophosphate" means that the mineral content in the raw material composition and/or in the fermented milk after fermentation (each content if multiple kinds of minerals are contained) is less than or equal to the content of minerals ("inorganic matter" such as calcium or iron) contained in, for instance, "raw milk" (Jersey, Holstein), "regular milk", "processed milk" (thick, low fat), or "skimmed milk", as described in the Japanese Standard Tables of Food Composition 7th revision and used as raw material milk.

The calcium compound content is more preferably less than 0.1 wt%. It is of note and intended that calcium originally contained in cow's milk does not fall under calcium compounds as "ingredients that are difficult to be dispersed in the raw material composition for fermented milk" in this context (i.e., fermented milk of the present invention may contain calcium). For example, the calcium content in the fermented milk of the present invention is preferably 1.5 wt% or less and more preferably 1.3 wt% or less based on the nonfat milk solid content.

The iron compound content is preferably less than 0.001 wt% and more preferably less than 0.0001 wt% in terms of iron weight itself.

The wording "substantially free of crushed skin-roasted or oil-roasted nuts" means that the content of crushed skin-roasted or oil-roasted nuts in the raw material composition and/or in the fermented milk after fermentation is preferably 3 wt% or less and most preferably zero.

### ---Method for Producing Fermented Milk---

The fermented milk of the present invention may be produced basically in the same way as for conventional fermented milk, except that the method includes the process of adding a food emulsifier. The above-mentioned "Ministerial Ordinance Concerning Standards for Ingredients of Milk and Dairy Products" (Ministerial Ordinance on Milk and Related Products, namely Ministerial Ordinance of the Ministry of Health and Welfare No. 52, December 27, 1951) and CODEX STANDARD FOR FERMENTED MILKS (CODEX STAN 243-2003) also each specify the method for producing fermented milk. While basically following the production method, the food emulsifier can be used in accordance with the present invention to define the production method.

In one embodiment of the present invention (first embodiment), the process of adding a food emulsifier is performed at the step of preparing a raw material composition. Specifically, the first method for producing fermented milk according to the present invention basically includes at least the following two steps, and may optionally include other step(s):
the step of preparing a raw material composition containing a food emulsifier (intentionally blended in relation to the effects of the present invention) (hereinafter, referred to as the "first preparation step"); and
the step of adding a lactic acid bacterium starter to the raw material composition for fermentation (hereinafter, referred to as the "first fermentation step").

In one embodiment of the present invention (second embodiment), the process of adding a food emulsifier is performed at the step where fermented milk has been obtained by the fermentation step. Specifically, the second method for producing fermented milk according to the present invention basically includes at least the following two steps, and may optionally include other step(s):
the step of preparing a raw material composition (hereinafter referred to as the "second preparation step"). ; and
the step of adding, after a lactic acid bacterium starter is added to the raw material composition for fermentation, a food emulsifier to the resulting fermented milk (hereinafter referred to as the "second fermentation step") .

In the following description, the case of simply referring to the "preparation step" collectively refers to the first preparation step and the second preparation step, and means a subject(s) applicable to the preparation step in any of the two embodiments. Also, the case of simply referring to the "fermentation step" collectively refers to the first fermentation step and the second fermentation step, and means a subject(s) applicable to the fermentation step in any of the two embodiments.

### - Preparation step

The raw material composition in the preparation step comprises at least raw material milk, further comprises a food emulsifier in the case of the first preparation step, and may optionally comprise additional various raw material(s) or ingredient(s) that can be used for production of fermented milk, including sugars (e.g., sucrose), and food additives such as sweeteners, colorants, thickeners/stabilizers/gelling agents (e.g., gelatin, agar, pectin, carboxymethyl cellulose (CMC)), and flavoring agents.

Details of the type and amount of food emulsifier included in the raw material composition, particularly preferred embodiments and the like, may be referred to the description herein in relation to the fermented milk of the present invention. For example, in the first production method (first preparation step) of the present invention, the content of food emulsifier in the raw material composition should be set in the same range as the above-described preferred range so that the content of food emulsifier in the fermented milk of the present invention is in the preferred range.

Specific examples of the raw material milk include: cow's milk, pasteurized milk, skimmed milk, full-fat milk powder, skimmed milk powder, concentrated full-fat milk, concentrated non-fat milk, cream, butter, buttermilk, whey, milk protein concentrate (MPC), whey protein concentrate (WPC), whey protein isolate (WPI), α-lactalbumin (α-La), and β-lactoglobulin (β-Lg). These raw material milk may be used singly or in combinations of two or more thereof.

In one embodiment of the present invention, the protein content and/or fat content in the raw material composition should be preferably set in the same range as the above-described preferred range so that the protein content and/or fat content in the fermented milk of the present invention is in the preferred range. The raw material milk to be blended in the raw material composition may be used singly or in combinations of two or more thereof at a suitable weight ratio, based on the corresponding protein content and/or fat content, so that the protein content and/or fat content in the raw material composition is in such a preferred range.

The raw material composition may be prepared using a conventional procedure by mixing a food emulsifier, raw material milk, and various other raw materials optionally used.

In one embodiment of the present invention, the preparation step does not comprise mixing another raw material with: a pre-prepared product obtained by processing phytosterols with a food emulsifier (see the above Patent Literature 6); a pre-prepared insoluble minerals, for example, a product obtained by processing calcium carbonate, calcium phosphate, or ferric pyrophosphate with a food emulsifier (see the above Patent Literature 2, 3 or 4); a pre-prepared product obtained by processing nuts such as crushed skin-roasted or oil-roasted nuts with a food emulsifier (see the above Patent Literature 5); or a pre-prepared product obtained by processing, with a food emulsifier, other raw materials or ingredients that are unlikely to be dispersed in the raw material composition for fermented milk.

### - Fermentation step

Details of the lactic acid bacterium starter used in the fermentation step, particularly preferred embodiments (lactic acid bacterium) and the like, may be referred to the description herein in relation to the fermented milk of the present invention. The amount of lactic acid bacterium starter added to the raw material composition may also be adjusted appropriately according to a conventional procedure.

The raw material composition before the start of fermentation may be sterilized under common sterilization conditions by a conventional procedure.

The fermentation conditions (e.g., the temperature, time, pH) may be basically the same as those in a typical lactic acid bacterium production method, and may be optionally adjusted appropriately to be desirable corresponding to the embodiment of the present invention (e.g., a food emulsifier, a lactic acid bacteria starter used). The temperature of fermentation is usually from 30 to 50°C and preferably from 40 to 45°C. The fermentation time is usually from 1 to 24 hours and preferably from 3 to 24 hours. The fermentation may proceed until the pH of fermented milk reaches usually 3.5 to 5.0, preferably 4.0 to 4.8, and more preferably 4.3 to 4.8.

The second fermentation step further comprises the process of adding a food emulsifier to fermented milk obtained by fermentation. Details of the type and amount of food emulsifier added at this stage and included in the final fermented milk product, particularly preferred embodiments and the like, may be referred to the description herein in relation to the fermented milk of the present invention. For example, in the second production method (second fermentation step) of the present invention, the content of food emulsifier added to fermented milk obtained after fermentation should be set in the same range as the above-described preferred range so that the content of food emulsifier in the fermented milk of the present invention is in the preferred range.

From the viewpoint of lowering the effect of suppressing an acidity increase during storage, the second fermentation step does not essentially comprise mixing with cream (e.g., those described in Patent Literature 7, which have been, for instance, pre-mixed with the food emulsifier in the present invention); fats or oils (e.g., those described in Patent Literature 8, which have been, for instance, pre-mixed with the food emulsifier in the present invention); or other ingredients that are difficult to be dispersed in the raw material composition for fermented milk (typically, those that have been, for instance, pre-mixed with the food emulsifier in the present invention). The wording "does not essentially comprise mixing with cream" means that the amount of cream mixed in the second fermentation step is preferably less than 10 wt% and most preferably zero. The wording "does not essentially comprising mixing with fats or oils" means that the amount of fats or oils mixed in the second fermentation step is preferably less than 5 wt%, more preferably less than 1 wt%, still more preferably less than 0.1 wt%, and most preferably zero.

The fermented milk obtained by the first production method according to the present invention has a modified flavor and/or texture compared to those of conventional fermented milk.

When the flavor of fermented milk is modified, for instance, but is not limited to, suppression of acidity appears. The flavor may be modified from other viewpoints, for instance, suppression of fermentation odor.

When the texture of fermented milk is modified, for instance, but is not limited to, the properties such as softness or hardness appear. The texture may be modified from other viewpoints.

The effect of flavor and/or texture modification may be checked, for example, by sensory evaluation. For example, the fermented milk (a product of the present invention) produced using the raw material composition containing a food emulsifier in the first production method and the fermented milk (a control product) produced without using the raw material composition containing a food emulsifier are each subject to sensory evaluation in which items and scores for a given flavor and/or texture are set. The flavor and/or texture modification effect may be determined to be exerted when the rating (an average score of multiple panelists) is higher in the product of the present invention than the control product.

In addition, the texture modification effect can be checked, for example, by measuring the curd tension and/or viscosity. For example, the curd tension may be determined by measuring the maximum stress at the time of penetration through set-type yogurt while using a texture analyzer, manufactured by Stable Micro Systems, Inc. Further, the viscosity may also be determined, for example, by measuring the viscosity of soft-type yogurt while using a B-type viscometer, manufactured by Brookfield, Inc.

Note that in addition to the above evaluations, other indicators related to the flavor and/or texture, for example, the type and amount (balance) of organic acids in fermented milk, the type and amount (balance) of polysaccharides (extracellular polysaccharides) released from lactic acid bacteria, the state of the protein network, the results of test for analyzing the texture (e.g., tackiness) may be used to evaluate the effect of modifying the flavor and/or texture.

The fermented milk obtained by the second production method according to the present invention has a less acidity increase during storage than conventional fermented milk.

The suppression of the increase in acidity may be checked, for example, by storing fermented milk under conditions at a given temperature and for a given period of time, recording the acidity at the start (days) and at the end (days) of storage, and determining how much the acidity increases. For example, a product (a product of the present invention) obtained by adding a food emulsifier to fermented milk obtained after fermentation according to the second production method and a product (a control product) obtained without adding any food emulsifier are each stored at a given temperature (e.g., 4-10°C, 11-20°C, or 21-30°C) for a given period (e.g., 14 days), and the acidity is measured between before and after storage. The degree of the increase in the product of the present invention may be smaller than that in the control product. Or when the storage temperature is set to x and the degree of increase in acidity is set to y, the above-mentioned predetermined relational expression may be satisfied. These cases may be determined such that the effect of suppressing an acidity increase during storage has been elicited.

### ---Method of Modifying Flavor and/or Texture of Fermented Milk---

A method of modifying a flavor and/or texture of fermented milk according to the present invention comprises blending a food emulsifier into a raw material composition during production of fermented milk. Technical matters concerning fermented milk and a production method therefor (first production method) as described herein are applicable appropriately to technical matters concerning such a method of modifying a flavor and/or texture of fermented milk, for example, preferred embodiments (e.g., the type, content) of food emulsifier.

### ---Method of Suppressing Increase in Acidity of Fermented Milk during Storage---

A method of suppressing an increase in acidity of fermented milk during storage according to the present invention comprises adding a food emulsifier to fermented milk obtained after fermentation. Technical matters concerning fermented milk and a production method therefor (second production method) as described herein are applicable appropriately to technical matters concerning such a method of suppressing an increase in acidity of fermented milk during storage, for example, preferred embodiments (e.g., the type, content) of food emulsifier.

### Examples

The products used in the following Examples are as follows:
"Ryoto Sugar Ester P-1670" (sucrose palmitate with HLB = 16; Mitsubishi Chemical Foods Corporation);
"Ryoto Sugar Ester S-1170" (sucrose stearate with HLB = 11; Mitsubishi Chemical Foods Corporation);
"Ryoto Sugar Ester O-1570" (sucrose oleate with HLB = 15; Mitsubishi Chemical Foods Corporation);
"Ryoto Sugar Ester M-1695" (sucrose myristate with HLB = 16; Mitsubishi Chemical Foods Corporation);
"Ryoto Sugar Ester L-1695" (sucrose laurate with HLB = 16; Mitsubishi Chemical Foods Corporation);
"Ryoto Polyglyester S-10D" (polyglycerol stearate with HLB = 14; Mitsubishi Chemical Foods Corporation);
"DP-95RF" (diglycerol palmitate; RIKEN VITAMIN CO., LTD.);
"TRP-97RF" (triglycerol palmitate; RIKEN VITAMIN CO., LTD.);
"MS-3S" (tetraglycerol stearate; Sakamoto Yakuhin Kogyo Co., Ltd.);
"MS-5S" (hexaglycerol stearate; Sakamoto Yakuhin Kogyo Co., Ltd.);
"DS-100A" (diglycerol stearate; RIKEN VITAMIN CO., LTD.);
"GRINSTED SSL FP55" (sodium stearoyl lactylate; expressed as "SSL" in the tables; Danisco, Inc.);
"Type P(V)S" (distilled monoglyceride, expressed as "MG" in the tables; RIKEVITA FINE CHEMICAL & FOOD INDUSTRY (SHANGHAI));
"Poem B-30" (succinic acid monoglyceride, expressed as "succinic acid MG" in the tables; RIKEN VITAMIN CO., LTD.);
"DATEM517K" (diacetyl tartrate monoglyceride, expressed as "DATEM" in the tables; Danisco, Inc.);
"granulated sugar" (Nissin Sugar Co., Ltd.); and
"erythritol" (Mitsubishi Chemical Foods Corporation).

### [Test Example 1]

According to each composition shown in Table 1, the respective raw materials were mixed, heated, stirred and dissolved until the mixture became homogeneous to prepare a fermented milk mix. Next, after sterilization at 85°C for 10 min, 0.5 wt% of "YoFlex F-DVS Premium 1.0" (Chr. Hansen, Inc.) was added as a lactic acid bacterium starter, and the mixture was fermented at 42°C until the pH reached 4.4 to produce fermented milk.

**[Table 1]**

| | Raw material composition (wt%) | | | | Protein content (%) | Fat content (%) | Evaluation 1 |
|---|---|---|---|---|---|---|---|
| | Cow's milk | Skimmed milk powder | Emulsifier | | | | Number of ratings where the acid taste sensation was weak. |
| Example 1 | 99.9 | - | P-1670 | 0.1 | 3.4 | 3.9 | 13 |
| Comparative Example 1 | 100 | - | - | - | 3.4 | 3.9 | 3 |

### <Evaluation 1>

An expert panel consisting of four trained panelists conducted a sensory evaluation of the fermented milk obtained in Example 1 and Comparative Example 1 by a two-point discrimination test in which the one with weaker acid taste sensation was selected. The evaluation was conducted four times independently per panelist to obtain a total of 16 ratings. Table 1 collectively shows the results. In 13 out of 16 ratings, the acid taste sensation was weaker in the fermented milk of the present invention (Example 1). The acid taste was found to be significantly weaker in the fermented milk of the present invention (Example 1) than in the regular fermented milk (Comparative Example 1) (the significance level was equal to or less than 5%).

### [Test Example 2]

Fermented milk was obtained in the same manner as in Test Example 1, except that each ingredient was mixed according to the composition shown in Table 2 and the amount of lactic acid bacterium starter added was 0.02 wt%.

**[Table 2]**

| | Raw material composition (wt%) | | | | Protein content (%) | Fat content (%) | Evaluation 2 | |
|---|---|---|---|---|---|---|---|---|
| | Cow's milk | Skimmed milk powder | Emulsifier | | | | Average score | Rating |
| Example 2-1 | 99.9 | - | P-1670 | 0.1 | 3.4 | 3.9 | 2.30 | AA |
| Example 2-2 | 99.95 | - | P-1670 | 0.05 | 3.4 | 3.9 | 3.10 | BB |
| Comparative Example 2 | 100 | - | - | - | 3.4 | 3.9 | 3.70 | - |

### <Evaluation 2>

An expert panel consisting of five trained panelists conducted, based on the criteria below, an acidity evaluation of the fermented milk obtained in Example 2-1, Example 2-2, and Comparative Example 2. The evaluation was duplicated independently, and a total of 10 ratings was obtained. The ratings were averaged and compared. The difference (a-b) was calculated by subtracting the average score (b) of the fermented milk being evaluated from the average score (a) of the regular fermented milk (Comparative Example 2). Table 2 collectively shows the results. The acid taste was found to be significantly weaker in the fermented milk of the present invention (Example 2-1) than in the regular fermented milk (Comparative Example 2) (the significance level was equal to or less than 1%). In addition, the acid taste was found to be significantly weaker in the fermented milk of the present invention (Example 2-2) than in the regular fermented milk (Comparative Example 2) (the significance level was equal to or less than 5%).

### Acid taste criteria (rating score)

1: Weak acid taste
2: Somewhat weak acid taste
3: Neither strong nor weak acid taste
4: Somewhat strong acid taste
5: Strong acid taste

### [Test Example 3]

Fermented milk was obtained in the same manner as in Test Example 1, except that each ingredient was mixed according to the composition shown in Table 3. Note that Comparative Example 3 in Table 3 is provided such that fermented milk was produced by repeating the same conditions as for Comparative Example 1 in Table 1.

### <Evaluation 3>

The acid taste was evaluated, based on the criteria below, by an expert panel consisting of four trained panelists. The ratings of four panelists were averaged and compared. The difference (a-b) was calculated by subtracting the average score (b) of the fermented milk being evaluated from the average score (a) of the regular fermented milk (Comparative Example 3). The values were rated as AA when the difference was greater than 1; BB when the difference was greater than 0.5 and 1 or less; CC when the difference was greater than 0 and 0.5 or less; and DD when the difference was 0 or a negative number. Table 3 collectively shows the results. The fermented milk of the present invention (Example 3) was rated as CC, indicating that the acid taste was suppressed more than that of the regular fermented milk (Comparative Example 3).

### Acid taste criteria (rating score)

1: Weak acid taste
2: Somewhat weak acid taste
3: Neither strong nor weak acid taste
4: Somewhat strong acid taste
5: Strong acid taste

**[Table 3]**

| | Raw material composition (wt%) | | | | Protein content (%) | Fat content (%) | Evaluation 3 | |
|---|---|---|---|---|---|---|---|---|
| | Cow's milk | Skimmed milk powder | Emulsifier | | | | Average score | Rating |
| Example 3 | 99.95 | - | P-1670 | 0.05 | 3.4 | 3.9 | 3.25 | CC |
| Comparative Example 3 (Comparative Example 1) | 100 | - | - | - | 3.4 | 3.9 | 3.75 | - |

### [Test Example 4]

Fermented milk was obtained in the same manner as in Test Example 1, except that each ingredient was mixed according to the composition shown in Table 4 and the amount of lactic acid bacterium starter added was 0.02 wt%. Note that Comparative Example 4 in Table 4 is provided such that fermented milk was produced by repeating the same conditions as for Comparative Example 2 in Table 2.

### <Evaluation 4>

The acid taste was evaluated, based on the criteria below, by an expert panel consisting of four trained panelists. The ratings of four panelists were averaged and compared. The difference (a-b) was calculated by subtracting the average score (b) of the fermented milk being evaluated from the average score (a) of the regular fermented milk (Comparative Example 4 = Comparative Example 2). The values were rated as AA when the difference was greater than 1; BB when the difference was greater than 0.5 and 1 or less; CC when the difference was greater than 0 and 0.5 or less; and DD when the difference was 0 or a negative number. Table 4 collectively shows the results.

### Acid taste criteria (rating score)

1: Weak acid taste
2: Somewhat weak acid taste
3: Neither strong nor weak acid taste
4: Somewhat strong acid taste
5: Strong acid taste

**[Table 4]**

| | Raw material composition (wt%) | | | | Protein content (%) | Fat content (%) | Evaluation 4 | |
|---|---|---|---|---|---|---|---|---|
| | Cow's milk | Skimmed milk powder | Emulsifier | | | | Average score | Rating |
| Example 4-1 | 99.9 | - | DP-95RF | 0.1 | 3.4 | 3.9 | 2.5 | BB |
| Example 4-2 | 99.9 | - | TRP-97RF | 0.1 | 3.4 | 3.9 | 3 | CC |
| Comparative Example 4 (Comparative Example 2) | 100 | - | - | - | 3.4 | 3.9 | 3.5 | - |

### [Test Example 5]

Fermented milk was obtained in the same manner as in Test Example 1, except that each ingredient was mixed according to the composition shown in Table 5. Note that Comparative Example 5 in Table 5 is provided such that fermented milk was produced by repeating the same conditions as for Comparative Example 1 in Table 1.

Further, the acid taste was evaluated in the same manner as in Evaluation 3 of Test Example 3. Table 5 collectively shows the results.

**[Table 5]**

| | Raw material composition (wt%) | | | | Protein content (%) | Fat content (%) | Evaluation 3 | |
|---|---|---|---|---|---|---|---|---|
| | Cow's milk | Skimmed milk powder | Emulsifier | | | | Average score | Rating |
| Example 5-1 | 99.9 | - | S-1170 | 0.1 | 3.4 | 3.9 | 2.25 | AA |
| Example 5-2 | 99.9 | - | SSL | 0.1 | 3.4 | 3.9 | 3.5 | CC |
| Example 5-3 | 99.9 | - | MG | 0.1 | 3.4 | 3.9 | 3.5 | CC |
| Comparative Example 5 (Comparative Example 1) | 100 | - | - | - | 3.4 | 3.9 | 4 | - |

### [Test Example 6]

Fermented milk was obtained in the same manner as in Test Example 1, except that each ingredient was mixed according to the composition shown in Table 6 and sterilization was conducted at 80°C for 20 min.

Further, the acid taste was evaluated in the same manner as in Evaluation 3 of Test Example 3, except that "a" was set to the average score of Comparative Example 6 instead of the average score of Comparative Example 3. Table 6 collectively shows the results.

**[Table 6]**

| | Raw material composition (wt%) | | | | Protein content (%) | Fat content (%) | Evaluation 3 | |
|---|---|---|---|---|---|---|---|---|
| | Cow's milk | Skimmed milk powder | Emulsifier | | | | Average score | Rating |
| Example 6-1 | 94.95 | 5 | P-1670 | 0.05 | 5 | 3.7 | 2.75 | AA |
| Example 6-2 | 94.9 | 5 | P-1670 | 0.1 | 5 | 3.7 | 2.75 | AA |
| Example 6-3 | 94.9 | 5 | S-1170 | 0.1 | 5 | 3.7 | 3.5 | CC |
| Example 6-4 | 94.9 | 5 | Succinic acid MG | 0.1 | 5 | 3.7 | 3 | BB |
| Example 6-5 | 94.9 | 5 | DATEM | 0.1 | 5 | 3.7 | 3.75 | CC |
| Comparative Example 6 | 95 | 5 | - | - | 5 | 3.7 | 4 | - |

### [Test Example 7]

Fermented milk was obtained in the same manner as in Test Example 1, except that each ingredient was mixed according to the composition shown in Table 7, sterilization was conducted at 85°C for 10 min, the amount of lactic acid bacterium starter added was 0.02 wt%, and fermentation was performed at 42°C until the pH reached 4.3.

### <Evaluation 5>

The acid taste at the moment of ingestion was evaluated, based on the criteria below, by an expert panel consisting of four trained panelists. The ratings of four panelists were averaged and compared. The difference (a-b) was calculated by subtracting the average score (b) of the fermented milk being evaluated from the average score (a) of the regular fermented milk (Example 7-1 vs. Comparative Example 7-1, Example 7-2 vs. Comparative Example 7-2). The values were rated as AA when the difference was greater than 1; BB when the difference was greater than 0.5 and 1 or less; CC when the difference was greater than 0 and 0.5 or less; and DD when the difference was 0 or a negative number. Table 7 collectively shows the results.

### Acid taste criteria (rating score)

1: Weak acid taste at the moment of ingestion
2: Somewhat weak acid taste at the moment of ingestion
3: Neither strong nor weak acid taste at the moment of ingestion
4: Somewhat strong acid taste at the moment of ingestion
5: Strong acid taste at the moment of ingestion

**[Table 7]**

| | Raw material composition (wt%) | | | | | Protein content (%) | Fat content (%) | Evaluation 5 | |
|---|---|---|---|---|---|---|---|---|---|
| | Cow's milk | Granulated sugar | Erythritol | Emulsifier | | | | Average score | Rating |
| Example 7-1 | 95.9 | 4 | - | P-1670 | 0.1 | 3.3 | 3.7 | 2 | AA |
| Comparative Example 7-2 | 96.0 | 4 | - | - | - | 3.3 | 3.7 | 3.75 | - |
| Example 7-2 | 93.2 | - | 6.7 | P-1670 | 0.1 | 3.2 | 3.6 | 3 | CC |
| Comparative Example 7-2 | 93.3 | - | 6.7 | - | - | 3.2 | 3.6 | 3.5 | - |

### [Test Example 8]

According to each composition shown in Table 8, the respective raw materials were mixed, heated, stirred and dissolved until the mixture became homogeneous to prepare a fermented milk mix. Next, after sterilization at 85°C for 10 min, 0.02 wt% of "YoFlex F-DVS Premium 1.0" (Chr. Hansen, Inc.) was added, and the mixture was fermented at 42°C until the pH reached 4.4 while the fermented milk mix was charged up to 60 mm from the bottom in a plastic resin container of 58 mm in diameter at the top, 48 mm in diameter at the bottom, and 70 mm in height. The fermented mixture was then cooled at 5°C until the temperature reached a constant temperature, and set-type yogurt was thus obtained. Comparative Example 8 (a-f) was repeated in each test as a control.

**[Table 8-1]**

| | Raw material composition (wt%) | | | | Protein content (%) | Fat content (%) | Evaluation 5 | | |
|---|---|---|---|---|---|---|---|---|---|
| | Cow's milk | Skimmed milk powder | Emulsifier | | | | Test | Curd tension (g) | Difference from control |
| Example 8-1 | 99.95% | 0% | P-1670 | 0.05% | 3.4 | 3.9 | Test 8-1 | 73.6 | -4.2 |
| Example 8-2 | 99.90% | 0% | P-1670 | 0.10% | 3.4 | 3.9 | Test 8-1 | 69.4 | -8.4 |
| Example 8-3 | 99.85% | 0% | P-1670 | 0.15% | 3.4 | 3.9 | Test 8-1 | 52.0 | -25.8 |
| Comparative Example 8a | 100.00% | 0% | - | 0% | 3.4 | 3.9 | Test 8-1 | 77.8 | - |
| Example 8-4 | 99.95% | 0% | S-1170 | 0.05% | 3.4 | 3.9 | Test 8-2 | 70.3 | -3.4 |
| Example | 99.90% | 0% | S-1170 | 0.10% | 3.4 | 3.9 | Test | 70.1 | -3.7 |
| 8-5 | | | | | | | 8-2 | | |
| Example 8-6 | 99.85% | 0% | S-1170 | 0.15% | 3.4 | 3.9 | Test 8-2 | 68.4 | -5.3 |
| Example 8-7 | 99.95% | 0% | S-10D | 0.05% | 3.4 | 3.9 | Test 8-2 | 69.5 | -4.2 |
| Example 8-8 | 99.90% | 0% | S-10D | 0.10% | 3.4 | 3.9 | Test 8-2 | 63.7 | -10.0 |
| Example 8-9 | 99.85% | 0% | S-10D | 0.15% | 3.4 | 3.9 | Test 8-2 | 66.7 | -7.0 |
| Comparative Example 8b | 100.00% | 0% | - | 0% | 3.4 | 3.9 | Test 8-2 | 73.7 | - |
| Example 8-10 | 99.95% | 0% | SSL | 0.05% | 3.4 | 3.9 | Test 8-3 | 72.0 | 14.2 |
| Example 8-11 | 99.95% | 0% | MG | 0.05% | 3.4 | 3.9 | Test 8-3 | 52.3 | -5.6 |
| Example 8-12 | 99.90% | 0% | MG | 0.10% | 3.4 | 3.9 | Test 8-3 | 47.0 | -10.9 |
| Example 8-13 | 99.85% | 0% | MG | 0.15% | 3.4 | 3.9 | Test 8-3 | 43.6 | -14.2 |
| Comparative Example 8c | 100.00% | 0% | - | 0% | 3.4 | 3.9 | Test 8-3 | 57.9 | - |

**[Table 8-2]**

| | Raw material composition (wt%) | | | | Protein content (%) | Fat content (%) | Evaluation 5 | | |
|---|---|---|---|---|---|---|---|---|---|
| | Cow's milk | Skimmed milk powder | Emulsifier | | | | Test | Curd tension (g) | Difference from control |
| Example 8-14 | 99.95% | 0% | Succinic acid MG | 0.05% | 3.4 | 3.9 | Test 8-4 | 68.1 | 3.6 |
| Example 8-15 | 99.95% | 0% | DATEM | 0.05% | 3.4 | 3.9 | Test 8-4 | 69.0 | 4.5 |
| Example 8-16 | 99.90% | 0% | DATEM | 0.10% | 3.4 | 3.9 | Test 8-4 | 73.5 | 9.0 |
| Example 8-17 | 99.85% | 0% | DATEM | 0.15% | 3.4 | 3.9 | Test 8-4 | 73.5 | 9.0 |
| Comparative Example 8d | 100.00% | 0% | - | 0% | 3.4 | 3.9 | Test 8-4 | 64.5 | - |
| Example 8-18 | 99.95% | 0% | DP | 0.05% | 3.4 | 3.9 | Test 8-5 | 70.7 | 8.9 |
| Example 8-19 | 99.90% | 0% | DP | 0.10% | 3.4 | 3.9 | Test 8-5 | 61.0 | -0.8 |
| Example 8-20 | 99.95% | 0% | DS -100A | 0.05% | 3.4 | 3.9 | Test 8-5 | 63.6 | 1.8 |
| Example 8-21 | 99.90% | 0% | DS -100A | 0.10% | 3.4 | 3.9 | Test 8-5 | 57.3 | -4.5 |
| Example 8-22 | 99.85% | 0% | DS -100A | 0.15% | 3.4 | 3.9 | Test 8-5 | 50.5 | -11.4 |
| Comparative Example 8e | 100.00% | 0% | - | 0% | 3.4 | 3.9 | Test 8-5 | 61.8 | - |
| Example 8-23 | 99.95% | 0% | TP | 0.05% | 3.4 | 3.9 | Test 8-6 | 71.1 | 1.8 |
| Example 8-24 | 99.90% | 0% | TP | 0.10% | 3.4 | 3.9 | Test 8-6 | 67.8 | -1.6 |
| Example 8-25 | 99.95% | 0% | MS-3S | 0.05% | 3.4 | 3.9 | Test 8-6 | 66.0 | -3.4 |
| Example 8-26 | 99.90% | 0% | MS-3S | 0.10% | 3.4 | 3.9 | Test 8-6 | 58.6 | -10.7 |
| Example 8-27 | 99.85% | 0% | MS-3S | 0.15% | 3.4 | 3.9 | Test 8-6 | 58.6 | -10.7 |
| Example 8-28 | 99.95% | 0% | MS-5S | 0.05% | 3.4 | 3.9 | Test 8-6 | 57.6 | -11.8 |
| Example 8-29 | 99.90% | 0% | MS-5S | 0.10% | 3.4 | 3.9 | Test 8-6 | 58.2 | -11.2 |
| Example 8-30 | 99.85% | 0% | MS-5S | 0.15% | 3.4 | 3.9 | Test 8-6 | 58.5 | -10.9 |
| Comparative Example 8f | 100.00% | 0% | - | 0% | 3.4 | 3.9 | Test 8-6 | 69.4 | - |

### [Test Example 9]

Set-type yogurt was obtained in the same manner as in Example 8, except that each ingredient was mixed according to the composition shown in Table 9 and fermentation was performed at 42°C until the pH reached about 4.45. Comparative Example 9 (a-d) was repeated in each test as a control.

**[Table 9-1]**

| | Raw material composition (wt%) | | | | Protein content (%) | Fat content (%) | Evaluation 5 | | |
|---|---|---|---|---|---|---|---|---|---|
| | Cow's milk | Skimmed milk powder | Emulsifier | | | | Test | Curd tension (g) | Difference from control |
| Example 9-1 | 94.95% | 5% | P-1670 | 0.05% | 5 | 3.7 | Test 9-1 | 117.1 | 2.2 |
| Example 9-2 | 94.90% | 5% | P-1670 | 0.10% | 5 | 3.7 | Test 9-1 | 118.2 | 3.3 |
| Example 9-3 | 94.85% | 5% | P-1670 | 0.15% | 5 | 3.7 | Test 9-1 | 110.8 | -4.1 |
| Example 9-4 | 94.95% | 5% | S-1170 | 0.05% | 5 | 3.7 | Test 9-1 | 108.3 | -6.5 |
| Example 9-5 | 94.90% | 5% | S-1170 | 0.10% | 5 | 3.7 | Test 9-1 | 117.8 | 3.0 |
| Example 9-6 | 94.85% | 5% | S-1170 | 0.15% | 5 | 3.7 | Test 9-1 | 110.9 | -4.0 |
| Comparative Example 9a | 95.00% | 5% | - | 0% | 5 | 3.7 | Test 9-1 | 114.9 | - |
| Example 9-7 | 94.95% | 5% | Succinic acid MG | 0.05% | 5 | 3.7 | Test 9-2 | 114.6 | 6.9 |
| Example 9-8 | 94.90% | 5% | Succinic acid MG | 0.10% | 5 | 3.7 | Test 9-2 | 112.7 | 5.0 |
| Example 9-9 | 94.95% | 5% | DATEM | 0.05% | 5 | 3.7 | Test 9-2 | 121.2 | 13.6 |
| Example 9-10 | 94.90% | 5% | DATEM | 0.10% | 5 | 3.7 | Test 9-2 | 127.2 | 19.6 |
| Example 9-11 | 94.85% | 5% | DATEM | 0.15% | 5 | 3.7 | Test 9-2 | 120.6 | 13.0 |
| Comparative Example 9b | 95.00% | 5% | - | 0% | 5 | 3.7 | Test 9-2 | 107.7 | - |

**[Table 9-2]**

| | Raw material composition (wt%) | | | | Protein content (%) | Fat content (%) | Evaluation 5 | | |
|---|---|---|---|---|---|---|---|---|---|
| | Cow's milk | Skimmed milk powder | Emulsifier | | | | Test | Curd tension (g) | Difference from control |
| Example 9-12 | 94.95% | 5% | S-10D | 0.05% | 5 | 3.7 | Test 9-3 | 110.3 | 1.2 |
| Example 9-13 | 94.90% | 5% | S-10D | 0.10% | 5 | 3.7 | Test 9-3 | 112.3 | 3.2 |
| Example 9-14 | 94.85% | 5% | S-10D | 0.15% | 5 | 3.7 | Test 9-3 | 119.1 | 10.0 |
| Example 9-15 | 94.95% | 5% | SSL | 0.05% | 5 | 3.7 | Test 9-3 | 116.4 | 7.4 |
| Comparative Example 9c | 95.00% | 5% | - | 0% | 5 | 3.7 | Test 9-3 | 109.1 | - |
| Example 9-16 | 94.95% | 5% | MG | 0.05% | 5 | 3.7 | Test 9-4 | 114.4 | -1.0 |
| Example 9-17 | 94.90% | 5% | MG | 0.10% | 5 | 3.7 | Test 9-4 | 121.8 | 6.4 |
| Example 9-18 | 94.85% | 5% | MG | 0.15% | 5 | 3.7 | Test 9-4 | 116.4 | 1.0 |
| Comparative Example 9d | 95.00% | 5% | - | 0% | 5 | 3.7 | Test 9-4 | 115.4 | - |

### <Evaluation 6: Measurement of Curd Tension>

Fermented milk obtained by the method in Test Example 8 or 9 was analyzed by a texture analyzer (TA. XTplus, manufactured by Stable Micro Systems, Inc.). The maximum load during penetration was measured using a cylindrical resin probe with a diameter of 20 mm under conditions at a velocity of 1 mm/sec and a penetration distance of 10 mm. The difference between fermented milk with each emulsifier and control was calculated and evaluated. Table 8 and 9 collectively show the results. It was found that the addition of emulsifier modified the curd tension of the fermented milk.

### [Preparation Example 1]

Cow's milk (proteins: 3.4 g/100 ml; lipids:3.9 g/100 ml) was sterilized at 85°C for 10 min; Meiji Bulgaria Yogurt Plain (Meiji Co., Ltd.) was added at 1 wt%; and the mixture was fermented at 42°C for 3.5 hours to produce fermented milk.

### [Test Example 10]

According to the composition shown in Table 10, an emulsifier and fructose glucose liquid sugar were mixed, sterilized at 85°C for 10 min, and mixed with the fermented milk obtained in Preparation Example 1 to produce the fermented milk of Examples 10-1 to 10-4 and Comparative Example 10.

**[Table 10]**

| | Fermented milk composition (wt%) | | | | | |
|---|---|---|---|---|---|---|
| | Fermented milk of Preparation Example 1 | Fructose glucose liquid sugar | Emulsifier | | | |
| | | | P-1670 | 0-1570 | L-1695 | M-1695 |
| Example 10-1 | 80 | 19.85 | 0.15 | - | - | - |
| Example 10-2 | 80 | 19.85 | 0.1 | 0.05 | - | - |
| Example 10-3 | 80 | 19.85 | - | - | 0.15 | - |
| Example 10-4 | 80 | 19.85 | - | - | - | 0.15 |
| Comparative Example 10 | 80 | 20 | - | - | - | - |

### <Evaluation 7>

The fermented milk as produced in Examples 10-1 to 10-4 or Comparative Example 10 was stored at 10°C. The acidity on the day of starting storage (Day 0) and 14 days later (Day 14) was measured in accordance with the method for measuring the acidity of milk or dairy product described in the "Ministerial Ordinance Concerning Standards for Ingredients of Milk and Dairy Products". The difference (d-c) between the acidity (c) at the start of storage (Day 0) and the acidity (d) at the end of storage (Day 14) was calculated. Here, y ≤ 0.0115x + 0.025 (x = storage temperature; y = d - c) specifies the preferred range of acidity increase when fermented milk is stored at a given temperature. When x and y in each Example or Comparative Example satisfied the relational expression, the case was rated as "BB", and if not, the case was rated as "DD". Table 11 shows the results. It was found that the increase in acidity at the time of storage at 10°C was less in the fermented milk of the present invention (Examples 10-1 to 10-4) than in the regular fermented milk (Comparative Example 10).

**[Table 11]**

| | Acidity (%) | | Number of lactic acid bacteria on Day 14 (cfu/ml) | y≦0.0115x+0.025 | | |
|---|---|---|---|---|---|---|
| | Day0 (c) | Day14 (d) | | x (Storage temperature) | y (d-c) | Results |
| Examples 10-1 | 0.606 | 0.655 | 5.3×10⁸ | 10 | 0.049 | BB |
| Examples 10-2 | 0.6 | 0.633 | 2.0×10⁸ | 10 | 0.033 | BB |
| Examples 10-3 | 0.64 | 0.69 | 73×10⁸ | 10 | 0.05 | BB |
| Examples 10-4 | 0.66 | 0.756 | 3.7×10⁸ | 10 | 0.096 | BB |
| Comparative Examples 10 | 0.632 | 0.779 | 6.4×10⁸ | 10 | 0.147 | DD |

### <Evaluation 8>

The acidity of the fermented milk of Examples 10-1 to 10-4 or Comparative Example 10 was measured on the day of starting storage (Day 0) and 14 days later (Day 14) in the same manner as in Evaluation 6, except that the storage temperature (x) was changed to 15°C. Then, whether or not the prescribed relational expression was satisfied was evaluated. Table 12 shows the results. It was found that the increase in acidity at the time of storage at 15°C was less in the fermented milk of the present invention (Examples 10-1 to 10-4) than in the regular fermented milk (Comparative Example 14) .

**[Table 12]**

| | Acidity (%) | | Number of lactic acid bacteria on Day 14 (cfu/ml) | y≦0.0115x+0.025 | | |
|---|---|---|---|---|---|---|
| | Day0 (c) | Day14 (d) | | x (Storage temperature) | y (d-c) | Results |
| Examples 10-1 | 0.606 | 0.73 | 1.7×10⁸ | 15 | 0.124 | BB |
| Examples 10-2 | 0.6 | 0.699 | 1.1×10⁸ | 15 | 0.099 | BB |
| Examples 10-3 | 0.64 | 0.723 | 1.3×10⁸ | 15 | 0.083 | BB |
| Examples 10-4 | 0.66 | 0.832 | 5.3×10⁸ | 15 | 0.172 | BB |
| Comparative Examples 10 | 0.632 | 0.922 | 1.2×10⁹ | 15 | 0.29 | DD |

### <Evaluation 8>

The acidity of the fermented milk of Examples 10-1 to 10-3 or Comparative Example 10 was measured on the day of starting storage (Day 0) and 14 days later (Day 14) in the same manner as in Evaluation 6, except that the storage temperature (x) was changed to 25°C. Then, whether or not the prescribed relational expression was satisfied was evaluated. Table 13 shows the results. It was found that the increase in acidity at the time of storage at 25°C was less in the fermented milk of the present invention (Examples 10-1 to 10-3) than in the regular fermented milk (Comparative Example 14) .

**[Table 13]**

| | Acidity (%) | | Number of lactic acid bacteria on Day 14 (cfu/ml) | y≦0.0115x+0.025 | | |
|---|---|---|---|---|---|---|
| | Day0 (c) | Day14 (d) | | x (Storage temperature) | y (d-c) | Results |
| Examples 10-1 | 0.606 | 0.746 | 2.6×10⁷ | 25 | 0.14 | BB |
| Examples 10-2 | 0.6 | 0.773 | 2.6×10⁷ | 25 | 0.173 | BB |
| Examples 10-3 | 0.64 | 0.774 | 3.3×10⁷ | 25 | 0.134 | BB |
| Comparative Examples 14 | 0.632 | 1.067 | <1×10⁴ | 25 | 0.435 | DD |

### [Preparation Example 2]

First, 771 g of skimmed milk powder was stirred and dissolved in 6168 g of water; the mixture was sterilized at 85°C for 10 min; Meiji Bulgaria Yogurt Plain (Meiji Co., Ltd.) was added at 1 wt%; and the mixture was fermented at 42°C for 3.5 hours to produce fermented milk.

### [Test Example 11]

According to the composition shown in Table 14, an emulsifier and fructose glucose liquid sugar were mixed, sterilized at 85°C for 10 min, and mixed with the fermented milk obtained in Preparation Example 2 to produce the fermented milk of Examples 11-1, Example 11-2 and Comparative Example 11.

**[Table 14]**

| | Fermented milk composition (wt%) | | |
|---|---|---|---|
| | Fermented milk of Preparation Example 2 | Fructose glucose liquid sugar | Emulsifier |
| | | | P-1670 |
| Example 11-1 | 90 | 9.8 | 0.2 |
| Example 11-2 | 90 | 9.75 | 0.25 |
| Comparative Example 11 | 90 | 10 | - |

According to Evaluation 6, the acidity of the fermented milk of Examples 11-1, Example 11-2, or Comparative Example 11 was measured on the day of starting storage (Day 0) and 14 days later (Day 14). Then, whether or not the prescribed relational expression was satisfied was evaluated. Table 15 shows the results. It was found that the increase in acidity at the time of storage at 10°C was less in the fermented milk of the present invention (Examples 11-1 to 11-2) than in the regular fermented milk (Comparative Example 11) .

**[Table 15]**

| | Acidity (%) | | Number of lactic acid bacteria on Day 14 (cfu/ml) | y≦0.0115x+0.025 | | |
|---|---|---|---|---|---|---|
| | Day0 (c) | Day14 (d) | | x (Storage temperature) | y (d-c) | Results |
| Example 11-1 | 0.921 | 0.998 | 2.4×10⁸ | 10 | 0.077 | BB |
| Example 11-2 | 0.916 | 0.985 | 2.6×10⁷ | 10 | 0.069 | BB |
| Comparative Example 11 | 0.904 | 1.109 | 1.6×10⁹ | 10 | 0.205 | DD |

## Claims

1. A method for producing fermented milk, comprising a process of adding a food emulsifier.

2. The production method according to claim 1, comprising the steps of:
preparing a raw material composition containing the food emulsifier; and
adding a lactic acid bacterium starter to the raw material composition for fermentation.

3. The production method according to claim 2, wherein the food emulsifier comprises at least one fatty acid ester selected from the group consisting of sucrose fatty acid esters, monoglycerides, organic acid monoglycerides, polyglycerol fatty acid esters having an average polymerization degree of 3 or less and having palmitic acid as a constituent fatty acid, and stearoyl lactylates.

4. The production method according to claim 3, wherein the food emulsifier comprises at least one fatty acid ester selected from the group consisting of monoglycerides, organic acid monoglycerides, polyglycerol fatty acid esters having an average polymerization degree of 3 or less and having palmitic acid as a constituent fatty acid, and stearoyl lactylates.

5. The production method according to claim 3 or 4, wherein the polyglycerol fatty acid esters have an average polymerization degree of less than 3.

6. The production method according to any one of claims 3 to 5, wherein the fatty acid constituting the food emulsifier has an unsaturated fatty acid content of 30% or less.

7. The production method according to any one of claims 2 to 6, wherein a content of the food emulsifier in the raw material composition is from 0.01 to 0.3 wt%.

8. The production method according to any one of claims 2 to 7, wherein the fermented milk has a fat content of 0.15 to 15.0%.

9. The production method according to any one of claims 2 to 8, wherein the food emulsifier has not been pre-treated with any phytosterol.

10. The production method according to claim 1, comprising the steps of:
adding a lactic acid bacterium starter to a raw material composition for fermentation; and
after addition of the lactic acid bacterium starter to the raw material composition for fermentation, adding a food emulsifier to the resulting fermented milk.

11. The production method according to claim 10, wherein the food emulsifier comprises at least one fatty acid ester selected from the group consisting of sucrose fatty acid esters, glycerol fatty acid esters, and stearoyl lactylates.

12. The production method according to claim 10 or 11, wherein the food emulsifier has not been pre-treated with calcium or iron.

13. The production method according to any one of claims 10 to 12, wherein a content of the food emulsifier in the raw material composition is 0.01 wt% or more.

14. The production method according to any one of claims 10 to 13, wherein the fermented milk has a fat content of 0 to 5.0%.

15. The production method according to any one of claims 10 to 14, wherein the total number of viable *Lactobacillus bulgaricus* and *Streptococcus thermophilus* bacteria in the fermented milk is 1 × 10⁶ cfu/ml or more.

16. The production method according to any one of claims 2 to 15, wherein the lactic acid bacterium starter comprises the genus *Lactobacillus.*

17. The production method according to any one of claims 1 to 16, wherein the fermented milk has a protein content of 2.7% or more.

18. Fermented milk comprising a food emulsifier.

19. The fermented milk according to claim 18, wherein the food emulsifier comprises at least one compound selected from the group consisting of sucrose fatty acid esters, glycerol fatty acid esters, and stearoyl lactylates.

20. The fermented milk according to claim 18 or 19, wherein a content of the food emulsifier is 0.01 wt% or more.

21. The fermented milk according to any one of claims 18 to 20, wherein the fermented milk has a fat content of 0 to 5.0%.

22. The fermented milk according to any one of claims 18 to 21, comprising the genus *Lactobacillus* as lactic acid bacteria.

23. The fermented milk according to any one of claims 18 to 22, wherein the total number of viable *Lactobacillus bulgaricus* and *Streptococcus thermophilus* bacteria in the fermented milk when storage is started is 1 × 10⁶ cfu/ml or more.

24. The fermented milk according to claims 18 to 23, wherein an increase (y%) in acidity after storage at x°C (4 ≤ x ≤ 35) for 14 days satisfies a relational expression: y ≤ 0.0115x + 0.025.

25. The fermented milk according to any one of claims 18 to 24, wherein the fermented milk has a protein content of 2.7% or more.

26. The fermented milk according to any one of claims 18 to 25, being substantially free of phytosterols.

27. The fermented milk according to any one of claims 18 to 26, wherein the fermented milk has a calcium content of 1.5 wt% or less based on a nonfat milk solid content.

28. The fermented milk according to any one of claims 18 to 27, wherein the fermented milk has an iron content of 0.001 wt% or less.

29. A method of modifying a flavor and/or texture of fermented milk, comprising blending a food emulsifier into a raw material composition during production of fermented milk.

30. A method of suppressing an increase in acidity of fermented milk during storage, comprising adding a food emulsifier to fermented milk during production of fermented milk.
